# EUROPÄISCHE PATENTANMELDUNG

(11) **EP 1 727 336 A2**
(43) Veröffentlichungstag der Anmeldung: **29.11.2006**
(21) Anmeldenummer: 06010508.7
(22) Anmeldetag: 22.05.2006
(51) Int. Cl.: H04M 1/60, G08G 1/09, H04M 1/725, G01C 21/28

(54) **Freisprecheinrichtung für ein Mobiltelefon mit Empfänger für Verkehrsfunknachrichten (TMC)**

(30) Priorität: 23.05.2005 DE 102005024164
(71) Anmelder: Bury Sp.z.o.o, 39 300 Mielec (PL)
(72) Erfinder: Piekarz, Roman, 39 300 Mielec (PL)
(74) Vertreter: Gerstein, Hans Joachim

(57) **Zusammenfassung**

Eine Freisprecheinrichtung für ein Mobiltelefon (M), das eine Telefon-Sende- und -Empfangseinheit für ein Mobilfunknetz und darüber hinaus eine Kommunikationseinrichtung zur drahtlosen Übertragung von Audio- und Datensignalen aufweist, mit einem Gehäuse (1), in dem sich eine mit der Kommunikationseinrichtung des Mobiltelefons eine drahtlose Kommunikationsverbindung bildende Kommunikationseinrichtung befindet, ermöglicht die Aktivierung durch ein Mobiltelefon (M) ohne oder zumindest ohne voluminöse Festinstallationen in einem Kraftfahrzeug dadurch, dass in dem Gehäuse (1) eine Telefonsende- und -Empfangseinheit für ein Mobilfunknetz integriert ist, die zum Empfangen von nutzerspezifischen Daten von einem Mobiltelefon (M) über die Kommunikationseinrichtung und Bereitstellung einer durch die nutzerspezifischen Daten festgelegten nutzerspezifischen Mobiltelefonfunktion durch die Telefon-sende- und -Empfangseinheit eingerichtet ist, dass die Telefonsende- und -Empfangseinheit mit einem Display (6) in dem Gehäuse (1) verbunden ist und dass das Gehäuse (1) einen Stromversorgungsanschluss und einen Antennenanschluss hat.

## Beschreibung

Die Erfindung betrifft eine Freisprecheinrichtung für ein Mobiltelefon, das eine Telefon-Sende- und -Empfangseinheit für ein Mobilfunknetz und darüber hinaus eine Kommunikationseinrichtung zur drahtlosen Übertragung von Audio- und Datensignalen aufweist, mit einem Gehäuse, in dem sich eine mit der Kommunikationseinrichtung des Mobiltelefons eine drahtlose Kommunikationsverbindung bildende Kommunikationseinrichtung befindet.

Derartige Freisprecheinrichtungen sind bekannt. Sie weisen einen Halter auf, in den das Mobiltelefon einsetzbar ist. Die drahtlosen Kommunikationseinrichtungen sind nach einem Standard ausgebildet, nämlich nach dem Bluetooth-Standard. Der Halter ist dabei regelmäßig mit einer im Fahrzeug installierten Steuerungsbox verbunden, über die vom Mobiltelefon übertragene Audiosignale an beispielsweise einen Lautsprecher weitergeleitet werden. Umgekehrt können von einem Mikrofon aufgenommene Audiosignale auf das Telefon übertragen und vom Telefon über die Telefon-Sendeeinheit ausgestrahlt werden. An diesem bekannten System ist nachteilig, dass ein nicht unerheblicher Platzbedarf für die fest installierten Teile der Freisprecheinrichtung besteht, der in Kraftfahrzeugen nicht immer zur Verfügung steht.

Der vorliegenden Erfindung liegt daher die Aufgabe zugrunde, eine Freisprecheinrichtung der eingangs erwähnten Art so auszubilden, dass keine oder nur noch kleinvolumige Teile fest verbaut werden müssen und eine Aktivierung einer Mobiltelefonfunktion leicht möglich ist.

Zur Lösung dieser Aufgabe ist erfindungsgemäß eine Freisprecheinrichtung der eingangs erwähnten Art dadurch gekennzeichnet, dass in dem Gehäuse eine TelefonSende- und -Empfangs-Einheit für ein Mobilfunknetz integriert ist, die zum Empfangen von nutzerspezifischen Daten von einem Mobiltelefon über die Kommunikationseinrichtung und Bereitstellung einer durch die nutzerspezifischen Daten festgelegten nutzerspezifischen Mobiltelefonfunktion durch die Telefon-Sende- und -Empfangs-Einheit eingerichtet ist, dass die Telefon-Sende- und -Empfangs-Einheit mit einem Display in dem Gehäuse verbunden ist und dass das Gehäuse einen Stromversorgungsanschluss und einen Antennenanschluss hat.

Die erfindungsgemäße Freisprecheinrichtung mit integriertem Mobiltelefonmodul lässt sich somit in einem einzigen Gehäuse unterbringen, das mit einem Display versehen ist und somit eine komfortable Bedienung ermöglicht. Das Gehäuse ist, vorzugsweise mittels eines Steckerfußes, im Fahrgastraum eines Kraftfahrzeuges unproblematisch montierbar, sinnvollerweise im Sichtfeld des Fahrers an einer Stelle, an der keine Störung der Verkehrswahrnehmung zu befürchten ist.

Die Stromversorgung der Freisprecheinrichtung erfolgt über das aus dem Gehäuse herausgeführte Kabel, und zwar in einfachster Weise durch Einstecken in einen Zigarettenanzünderkontakt, wodurch das Kabel über eine gewisse Länge im Passagierraum verlegt werden muss.

Durch die Abfrage der nutzerspezifischen Daten eines externen Mobiltelefons, das sich lediglich in Funkreichweite befinden muss, über die drahtlose Kommunikationsverbindung stehen die nutzerspezifischen Funktionen des externen Mobiltelefons in dem internen Mobiltelefonmodul zur Verfügung. Hierzu kann zum Beispiel der sogenannte rSAP-Standard genutzt werden. Die Telefon-Sende- und -Empfangs-Einheit ist dann solange wirksam geschaltet, wie die drahtlose Kommunikationsverbindung zu dem externen Mobiltelefon besteht. Dieses ist für Anrufe nicht mehr erreichbar und kann auch keine Anrufe aufbauen. Das externe Mobiltelefon wird somit weitestgehend deaktiviert. Lediglich ein Zugriff auf die in der SIM-Karte und gegebenenfalls einem Festspeicher des Mobiltelefons abgelegten nutzerspezifischen Daten ist über die drahtlose Kommunikationsverbindung möglich. Die Aktivierung der Mobiltelefonfunktion des im Gehäuse integrierten Mobiltelefonmoduls ist somit ohne Steckverbindung automatisch möglich.

Alternativ dazu kann an das Kabel eine fest (und verdeckt) im Fahrzeug installierte Anschlussbox angeschlossen sein, an die eine Versorgungsspannung und etwaige installierte Lautsprecher und/oder Mikrofone anschließbar sind. Die Anschlussbox benötigt außerordentlich wenig Einbauraum, der immer in geeigneter Weise zur Verfügung steht. In dieser Ausführungsform kann das Kabel vom Gehäuse aus auf kurzem Wege verdeckt, beispielsweise hinter dem Armaturenbrett, verlegt werden.

In einer bevorzugten Ausführungsform der Erfindung ist das Gehäuse zweiteilig ausgebildet und besteht aus einem fest montierbaren Steckerfuß und einem damit rastend verbindbaren Displayteil.

Wenn das Gehäuse wenigstens einen eingebauten Lautsprecher, vorzugsweise jedoch für eine Wiedergabe in Stereoqualität wenigstens zwei eingebaute Lautsprecher, aufweist, ist der Anschluss an einen externen Lautsprecher entbehrlich, sodass die Freisprecheinrichtung nicht auf eingebaute Lautsprecher zurückgreifen muss. Wird jedoch, beispielsweise über die Anschlussbox, eine Verbindung zu einem externen Lautsprecher hergestellt, werden die in das Gehäuse eingebauten Lautsprecher abgeschaltet. Die Lautsprecher befinden sich zweckmäßigerweise im Displayteil des zweiteilig ausgebildeten Gehäuses.

Es ist vorteilhaft, eine nachträglich eingebaute Freisprecheinrichtung mit einem geeignet positionierbaren Mikrofon zu verwenden. Demzufolge ist es zweckmäßig, wenn das Gehäuse mit einer Anschlussbuchse für ein externes Mikrofon versehen ist. Auch diese Anschlussbuchse ist bei einem zweiteilig ausgebildeten Gehäuse vorzugsweise im Displayteil untergebracht.

Hingegen wird die Stromversorgung, also das von dem Gehäuse wegführende Stromversorgungskabel, bei dem zweiteiligen Gehäuse aus dem Steckerfuß herausgeführt.

Die erfindungsgemäße Freisprecheinrichtung kann mit ihrem Display zweckmäßigerweise auch für die Unterstützung des Fahrers bei seiner Routenwahl verwendet werden. Ohne großen zusätzlichen Aufwand kann das Gehäuse mit einer Verkehrsfunknachrichten empfangenden Antenne und einer die Verkehrsfunknachrichten decodierenden Auswertungsschaltung versehen sein, wobei die Antenne zweckmäßigerweise im Steckerfuß des zweiteilig ausgeführten Gehäuses untergebracht ist. Diese oder eine weitere Antenne ist zudem für die Mobilfunkkommunikation in den Steckfuß integrierbar oder an den Steckfuß anschließbar.

Die Bedieneinheit der Freisprecheinrichtung ist vorzugsweise auf einer Oberseite des Displayteils angeordnet. Ergänzend oder alternativ hierzu kann die Bedieneinheit mit Vorteil auch als drahtlose Fernbedienung ausgebildet sein, die an geeigneter Stelle, beispielsweise am Lenkrad nachträglich befestigt werden und als Infrarot- oder Funkfernbedienung ausgeführt sein kann. Insbesondere mit einer derartigen Bedieneinheit können über die Freisprecheinrichtung auch Wählsignale mittels der drahtlosen Kommunikationsverbindung auf das Mobiltelefon übertragen werden. Der Wählvorgang kann somit durch den Fahrer beispielsweise am Lenkrad selbst veranlasst werden, sodass die mit einem Wählvorgang verbundene Ablenkung vom Verkehrsgeschehen minimal gehalten werden kann.

Die Erfindung soll im Folgenden anhand von in der Zeichnung dargestellten Ausführungsbeispielen näher erläutert werden. Es zeigen:
- Figur 1 -: eine schematische Darstellung einer Freisprecheinrichtung gemäß einer ersten Ausführungsform der Erfindung mit einem Anschlusskabel zur Stromversorgungs- und Antennenanschlusskabeln;
- Figur 2 -: zwei Teile des Gehäuses der Freisprecheinrichtung gemäß Figur 1 in voneinander getrennter Form,
- Figur 3 -: eine schematische Darstellung einer Freisprecheinrichtung gemäß einer zweiten Ausführungsform der Erfindung,
- Figur 4 -: die Freisprecheinrichtung gemäß Figur 3 mit voneinander getrennten Teilen des Gehäuses.

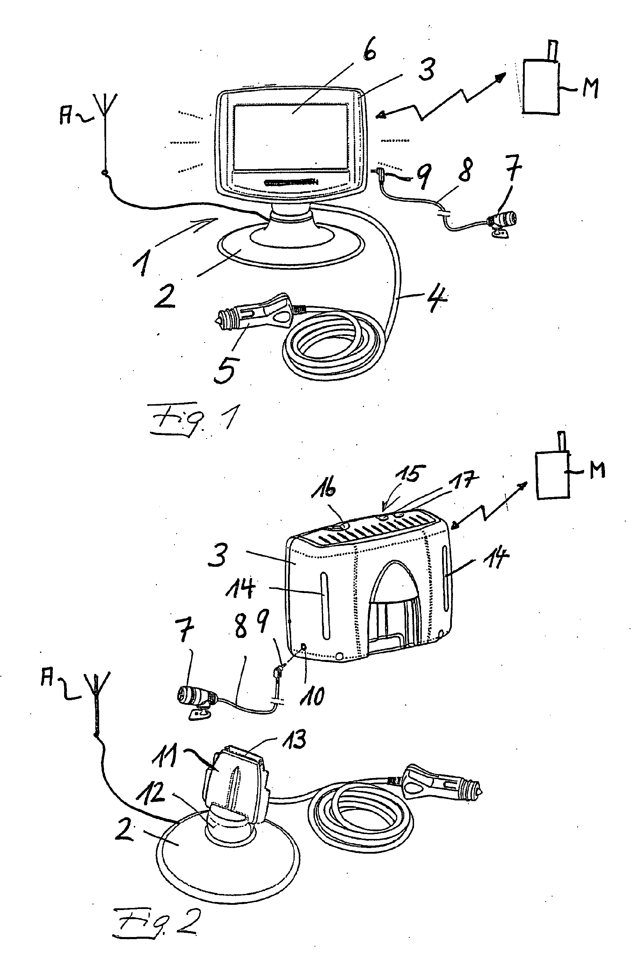

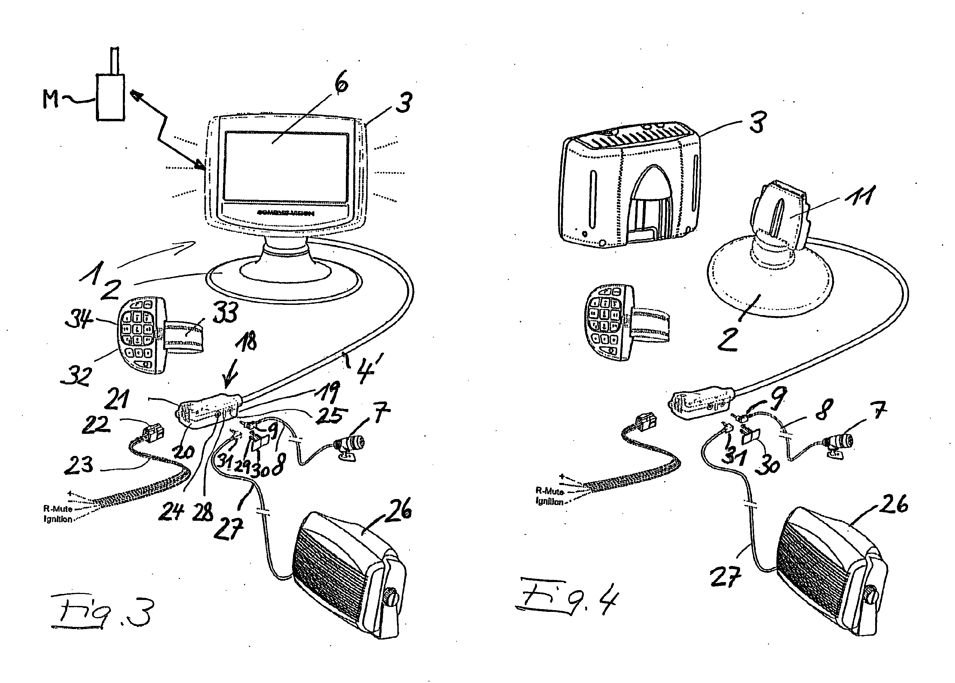

Die in den Figuren 1 und 2 dargestellte Freisprecheinrichtung weist ein Gehäuse 1 auf, das aus einem Steckerfuß 2 und einem Display teil 3 gebildet ist. Aus dem Steckerfuß 2 des Gehäuses 1 ist ein Stromversorgungskabel 4 herausgeführt, das an seinem Ende einen Stecker 5 aufweist, der mit einem Zigarettenanzünder-Steckkontakt eines Kraftfahrzeugs kontaktierbar ist, um so die Bordspannung des Kraftfahrzeugs der Freisprecheinrichtung zuzuleiten.

In das Gehäuse 1 ist eine Telefon-Sende- und -Empfangs-Einheit (nicht dargestellt) integriert, die ein vollständiges Mobiltelefonmodul bildet. Die Telefonsende- und -Empfangseinheit ist über ein Antennenanschlusskabel mit einer externen Antenne A verbunden. Zur Betriebsfähigkeit des Mobiltelefonmoduls in einem Mobilfunknetz sind nutzerspezifische Daten erforderlich, die üblicherweise auf einer SIM-Karte abgespeichert sind. Gemäß der vorliegenden Erfindung wird mit einer Kommunikationseinrichtung eine drahtlose Kommunikationsverbindung vorzugsweise nach dem Bluetooth-Standard zu einem externen Mobiltelefon M aufgebaut, um auf die in dem Mobiltelefon M auf der dortigen SIM-Karte oder auf einem Festspeicher abgelegten nutzerspezifischen Daten zuzugreifen. Dabei übernimmt die in dem Gehäuse 1 integrierte Telefon-Sende- und -Empfangs-Einheit die vollständige Funktionalität des externen Mobiltelefons M, das seinerseits weitestgehend deaktiviert wird. Ankommende Anrufe für die Telefonnummer, für die das externe Mobiltelefon M eigentlich freigeschaltet ist, werden nunmehr von der Telefon-Sende- und -Empfangs-Einheit empfangen. Durch den Zugriff auf die nutzerspezifischen Daten stehen auch die im externen Mobiltelefon M verfügbaren weiteren Daten, wie Telefonbucheinträge, Signalisierungseinstellungen, Zusatzprogramme etc. in der Telefon-Sende- und -Empfangs-Einheit zur Verfügung.

Zur Aktivierung der Freisprecheinrichtung und der darin integrierten Telefon-Sende-und Empfangs-Einheit ist es somit lediglich erforderlich, dass sich ein externes Mobiltelefon M in Funkreichweite zu der Freisprecheinrichtung befindet und eine Kommunikationseinrichtung hat, die technisch und hinsichtlich der Zugangsparameter eine Kommunikationsverbindung zu der Kommunikationseinrichtung der Telefon-Sende-und -Empfangs-Einheit ermöglicht. Nach dem derzeitigen Stand der Technik sollte das Mobiltelefon M eine Bluetooth-Schnittstelle aufweisen und den rSAP-Standard unterstützen.

Das Displayteil 3 des Gehäuses 1 weist an seiner Vorderseite ein Display 6 zur Darstellung von Telefondaten, beispielsweise der Nummer eines angewählten Teilnehmers oder eines Anrufers auf. An das Displayteil 3 ist ein externes Mikrofon 7 anschließbar, das mit einem Verbindungskabel 8 und einem üblichen Anschlussstecker 9 mit einer seitlich am Displayteil 3 des Gehäuses 1 angebrachten Mikrofonbuchse 10 an die Freisprecheinrichtung anschließbar ist.

Figur 2 verdeutlich, dass das Displayteil 3 auf den Steckerfuß 2 aufsteckbar ist. Hierzu weist der Steckerfuß 2 einen Flachstecker 11 auf, der an dem Steckerfuß 2 mittels eines Kugelgelenks 12 befestigt ist. Der Flachstecker 11 ist mit von oben zugänglichen Steckkontakten 13 versehen, mit denen die elektrische Verbindung zu dem Displayteil 3 herstellbar ist, wenn das Displayteil 3 von oben nach unten auf den Flachstecker 11 aufgeschoben wird, um eine rastende Verbindung des Displayteils 3 mit dem Steckerfuß 2 herzustellen.

In dem Displayteil 3 befindet sich eine Kommunikationseinrichtung, die mit einem externen Mobiltelefon M mit einer entsprechenden Kommunikationseinrichtung eine drahtlose Kommunikationsverbindung nach dem Bluetooth-Standard herstellen und aufrechterhalten kann. Auf diese Weise gelangen die nutzerspezifischen Daten des Mobiltelefons M in die Freisprecheinrichtung und können zur Aktivierung der Telefonsende- und -Empfangseinheit (Mobiltelefonmodul) genutzt werden.

Das Displayteil 3 weist an seiner Rückseite oder an seinen Seitenwänden zwei eingebaute Lautsprecher auf, die den Schall durch zugehörige Austrittsschlitze 14 abstrahlen. In Figur 1 ist die Schallabstrahlung in Stereoqualität nach beiden Seiten des Displayteils 3 durch punktierte Linien symbolisiert. Mit dem angeschlossenen Mikrofon 7 können somit die Freisprechfunktionen der Freisprecheinrichtung ausgeführt werden.

Die Durchführung eines Telefongesprächs erfolgt über die durch die nutzerspezifischen Daten des externen Mobiltelefons freigeschalteten Telefonsende- und Empfangseinheit im Gehäuse 1. Das externe Mobiltelefon M muss lediglich die Bluetooth-Kommunikationsverbindung mit der Freisprecheinrichtung aufrechterhalten und hat daher keinen festgelegten Standort. Das Mobiltelefon M kann beispielsweise zur Aktivierung der Funktionalität des Mobilfunkmoduls in einer Jackentasche des Fahrers des Kraftfahrzeugs verbleiben.

Um die Telefonfunktionen zu steuern, ist das Gehäuse 1 mit einer Bedieneinrichtung 15 versehen, die aus einer Ein/Aus-Taste 16 und zwei Tasten 17 besteht, mit denen die Annahme und das Beenden von Telefongesprächen, die Regulierung der Lautsprecher und das "Pairen" der Bluetooth-Kommunikationseinrichtungen gesteuert werden. Das "Pairen" dient der Abstimmung des Kommunikationsprotokolls nach dem Bluetooth-Standard und der Einstellung der beiden Kommunikationseinrichtungen aufeinander zur Herstellung der drahtlosen Kommunikationsverbindung.

Bei dem in den Figuren 3 und 4 dargestellten zweiten Ausführungsbeispiel der Erfindung ist das Gehäuse 1 praktisch identisch aufgebaut. Lediglich das Kabel 4', das aus dem Steckerfuß 2 herausgeführt ist, endet in einer Anschlussbox 18, und ist in eine erste kleine Stirnseite 19 der Anschlussbox 18 hineingeführt. Die gegenüberliegende Stirnseite 20 der Anschlussbox 18 weist eine Steckerbuchse 21 zur Kontaktierung mit einem Stecker 22 eines Steuerkabels 23 auf. Das Steuerkabel 23 führt eine Versorgungsspannung +,- sowie Steuersignale für die Stummschaltung eines Autoradios (R-Mute) vom Telefon und eines den Zustand der Zündung charakterisierenden Signals (Ignition) von der Standardklemme 15 der Autoelektronik. Durch das vom aktivierten Mobiltelefonmodul übermittelte Signal eines ankommenden Anrufs wird somit von der Freisprecheinrichtung über das Steuerkabel 23 das im Kraftfahrzeug befindliche Autoradio stummgeschaltet, um das Telefonat nicht zu stören. In entsprechender Weise wird das den Zustand der Zündung charakterisierende Signal "Ignition" von der Freisprecheinrichtung aufgenommen, um diese ein- und auszuschalten und ggf. über die drahtlose Kommunikationseinrichtung auf das Mobiltelefonmodul im Gehäuse 1 zu übertragen, um so die Funktionsbereitschaft der Freisprecheinrichtung zu signalisieren.

In dieser Ausführungsform ist an entsprechende Buchsen 24, 25 in einer Mantelwand der zylindrischen Anschlussbox 18 ein Lautsprecher 26 und/oder das externe Mikrofon 7 mittels eines Lautsprecherkabels 26 oder des Mikrofonkabels 8 anschließbar. Zwischen den Anschlussbuchsen 24, 25 weist die Anschlussbox 18 eine Rastaufnahme 28 auf, in die Raststege 29 einer Abdeckblende 30 einrastbar sind. Die Abdeckblende 30 kann dabei zur Sicherung des am Ende des Lautsprecherkabels 27 angebrachten Steckers 31 und/oder des Steckers 9 des Mikrofonkabels 8 dienen.

Das Displayteil 3 ist in dieser Ausführungsform mit einem (nicht dargestellten) Fernbedienungsempfänger in Form eines Infrarot- oder Funkempfängers ausgestattet, sodass die Bedienung der Freisprecheinrichtung über eine Fernbedienung 32 erfolgen kann, die mit einem verstellbaren Befestigungsband 33 am Lenkrad des Kraftfahrzeugs befestigbar ist. Die Fernbedienung kann insbesondere ein Tastenwählfeld 34 aufweisen, um einen Wählvorgang des Mobiltelefonmoduls zu steuern.

Die erfindungsgemäße Freisprecheinrichtung ermöglicht somit die Aktivierung eines Mobiltelefonmoduls der Freisprecheinrichtung, das mit der eigenen Telefon-Sende-und -Empfangseinheit eine Fernsprechverbindung herstellt und aufrechterhält. Lediglich die nutzerspezifischen Daten eines externen Mobiltelefons M werden über die drahtlose Kommunikationsverbindung auf die Freisprecheinrichtung übertragen, mit der sodann mit dem Mikrofon 7 und dem Lautsprecher 26 bzw. den eingebauten Lautsprecher 14 die Freisprechfunktion autark ausgeführt werden kann.
Optional kann in dem Gehäuse 1 eine Datenschnittstelle, beispielsweise ein USB-Anschluss integriert sein, um die in dem Gehäuse 1 enthaltene Steuerungssoftware zu aktualisieren, Programm- und Nutzdaten für das Mobiltelefonmodul von und zu externen Geräten zu übertragen und insbesondere um auf einem externen Gerät, beispielsweise einem USB-Datenspeicher, enthaltene Audiodaten über die Lautsprecherwiedergabefunktion der Freisprecheinrichtung ein- oder mehrkanalig (Mono-, Stereo-, Dolby-Surround etc.) wiederzugeben.

Optional kann auch ein nicht dargestellter SIM-Kartenleser in das Gehäuse 1 integriert sein, um eine für Mobiltelefone genutzten SIM-Karte, die nutzerspezifische Daten enthält, in den SIM-Kartenleser einzuführen und die in der SIM-Karte enthaltenen Daten zur Nutzung durch das Mobiltelefonmodul zu übertragen. Damit kann durch ein Einstecken einer SIM-Karte die Mobiltelefonfunktion aktiviert werden.

Das Mobiltelefonmodul der Freisprecheinrichtung sollte bevorzugt in an sich bekannter Weise eine Hands-Free-Funktionalität und Head-Set-Funktionalität haben, um die Freisprechfunktion auch in Verbindung mit nicht rSAP-fähigen Mobiltelefonen bereitzustellen. Das Hands-Free-Profil regelt die Kommunikation zwischen Freisprecheinrichtung und Mobiltelefon, um Sprachverbindungen mit dem Mobiltelefon aufzubauen und dieses fernzusteuern. Das Head-Set-Profil regelt die Kommunikation zwischen Mobiltelefon und einem externen Lautsprecher und Mikrofon sowie die ferngesteuerte oder automatische Rufannahme.

## Patentansprüche

1. Freisprecheinrichtung für ein Mobiltelefon, das eine Telefon-Sende- und -Empfangs-Einheit für ein Mobilfunknetz und darüber hinaus eine Kommunikationseinrichtung zur drahtlosen Übertragung von Audio- und Datensignalen aufweist, mit einem Gehäuse (1), in dem sich eine mit der Kommunikationseinrichtung des Mobiltelefons eine drahtlose Kommunikationsverbindung bildende Kommunikationseinrichtung befindet, wobei in dem Gehäuse (1) eine TelefonSende- und -Empfangs-Einheit integriert ist, die zum Empfangen von nutzerspezifischen Daten von einem Mobiltelefon über die Kommunikationseinrichtung und Bereitstellung einer durch die nutzerspezifischen Daten festgelegten nutzerspezifischen Mobiltelefonfunktion durch die Telefonsende- und - Empfangs-Einheit eingerichtet ist, dass die Telefon-Sende- und -Empfangs-Einheit mit einem Display (6) in dem Gehäuse (1) verbunden ist und dass das Gehäuse (1) einen Stromversorgungsanschluss und einen Antennenanschluss hat, **dadurch gekennzeichnet, dass** in das Gehäuse (1) und/oder dem Steckfuß (2) eine Verkehrsfunknachrichten empfangende Antenne und eine die Verkehrsfunknachrichten decodierende Auswertungsschaltung angeordnet sind.

2. Freisprecheinrichtung nach Anspruch 1, **dadurch gekennzeichnet, dass** das Gehäuse (1) zweiteilig ausgebildet ist und aus einem fest montierten Steckerfuß (2) und einem damit rastend verbindbaren Displayteil (3) besteht.

3. Freisprecheinrichtung nach Anspruch 1 oder 2, **dadurch gekennzeichnet, dass** das Gehäuse (1) wenigstens einen eingebauten Lautsprecher aufweist.

4. Freisprecheinrichtung nach Anspruch 2 und 3, **dadurch gekennzeichnet, dass** der wenigstens eine Lautsprecher in das Displayteil (3) des Gehäuses (1) eingebaut ist.

5. Freisprecheinrichtung nach einem der Ansprüche 1 bis 4, **dadurch gekennzeichnet, dass** das Gehäuse (1) mit einer Anschlussbuchse (10) für ein externes Mikrofon (7) versehen ist.

6. Freisprecheinrichtung nach Anspruch 2 und 5, **dadurch gekennzeichnet, dass** die Anschlussbuchse (10) am Displayteil (3) angeordnet ist.

7. Freisprecheinrichtung nach einem der Ansprüche 1 bis 6, **dadurch gekennzeichnet, dass** für den Stromversorgungsanschluss ein Stromversorgungskabel (4) mit einem Stecker (5) zur Kontaktierung eines Zigarettenanzünders versehen ist.

8. Freisprecheinrichtung nach einem der Ansprüche 1 bis 6, **dadurch gekennzeichnet, dass** für den Stromversorgungsanschluss ein Stromversorgungskabel (4') mit einer fest installierten Anschlussbox (18) verbunden ist, an die eine Versorgungsspannung (+, -) und etwaige installierte Lautsprecher (26) und Mikrofon (7) anschließbar sind.

9. Freisprecheinrichtung nach Anspruch 2 und Anspruch 7 oder 8, **dadurch gekennzeichnet, dass** das Stromversorgungskabel (4, 4') und das Antennenanschlusskabel mit dem Steckerfuß (2) verbunden ist und mit Kontaktsteckverbindungen mit der im Gehäuse (1) enthaltenen Elektronik verbunden werden kann.

10. Freisprecheinrichtung nach Anspruch 2, **dadurch gekennzeichnet, dass** eine Antenne im Steckerfuß (2) des Gehäuses (1) angeordnet ist.

11. Freisprecheinrichtung nach einem der vorhergehenden Ansprüche, **dadurch gekennzeichnet, dass** eine Bedieneinheit (15) auf einer Oberseite des Displayteils (3) angeordnet ist.

12. Freisprecheinrichtung nach einem der vorhergehenden Ansprüche, **dadurch gekennzeichnet, dass** eine Bedieneinheit für die Freisprecheinrichtung vorgesehen und als drahtlose Fernbedienung (32) ausgebildet ist.
